(19) Europäisches Patentamt / European Patent Office / Office européen des brevets

(11) **EP 3 034 142 B1**

(12) **FASCICULE DE BREVET EUROPEEN**

(45) Date de publication et mention
de la délivrance du brevet:
**23.08.2017 Bulletin 2017/34**

(51) Int Cl.:
**B01D 3/32** *(2006.01)* **B01D 53/18** *(2006.01)*
**B01F 3/04** *(2006.01)* **B63B 35/44** *(2006.01)*
**B01D 3/00** *(2006.01)* **B01D 3/24** *(2006.01)*

(21) Numéro de dépôt: **15306928.1**

(22) Date de dépôt: **04.12.2015**

(54) **PLATEAU DISTRIBUTEUR COMPACT POUR LES COLONNES DE CONTACT GAZ/LIQUIDE EN MER**

KOMPAKTE VERTEILUNGSPLATTFORM FÜR OFFSHORE-GAS-/FLÜSSIGKEITSKONTAKTSÄULEN

COMPACT DISPENSER TRAY FOR OFFSHORE GAS/LIQUID CONTACT COLUMNS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2014 FR 1462559**

(43) Date de publication de la demande:
**22.06.2016 Bulletin 2016/25**

(73) Titulaire: **IFP Énergies nouvelles**
**92852 Rueil-Malmaison Cedex (FR)**

(72) Inventeurs:
- **HAROUN, Yacine**
  **DAVIS, CA 95616 (US)**
- **ALIX, Pascal**
  **38150 ROUSSILLON (FR)**
- **FOURATI, Manel**
  **69007 VENISSIEUX (FR)**

(56) Documents cités:
WO-A1-2005/063352  US-A- 3 524 731
US-A- 4 543 219  US-A- 5 683 629
US-A- 6 053 484  US-A1- 2008 271 983
US-A1- 2013 277 868  US-B1- 6 436 245

EP 3 034 142 B1

**Description**

La présente invention concerne le domaine des colonnes de contact gaz/liquide en mer (en anglais offshores), et plus particulièrement les unités offshores de traitement de gaz, de captage du $CO_2$, de déshydratation ou encore de distillation.

Les unités offshores de traitement de gaz et/ou de captage du $CO_2$ par lavage aux amines comprennent des colonnes d'absorption et de régénération de fluides, liquide ou gazeux. Ces dernières fonctionnent en écoulement gaz/liquide à contre-courant où à co-courant et sont installées sur des bateaux, des barges flottantes ou des plateformes offshore, par exemple de type FPSO (de l'anglais Floating Production, Storage and Offloading qui signifie plateforme de production de stockage et de déchargement), ou du type FLNG (de l'anglais Floating Liquefied Natural Gas qui signifie plateforme de gaz naturel liquéfié). Sur les barges flottantes, peuvent être installées également des colonnes de distillation ou des colonnes de déshydratation.

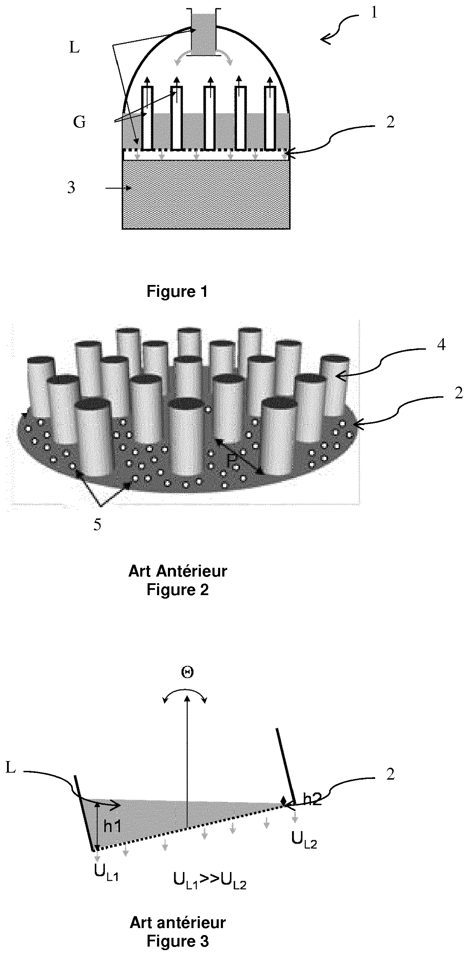

Les colonnes utilisées dans ces unités offshores de traitement de gaz et/ou de capture de $CO_2$ et/ou de distillation et/ou de déshydratation fonctionnent généralement sur le principe d'un échange de matière et/ou de chaleur entre le gaz et le fluide qui circulent dans les colonnes. La figure 1 représente un cas particulier d'une colonne de traitement de gaz 1 équipée d'un plateau distributeur en tête de colonne. Classiquement, cette colonne de traitement de gaz 1 comporte plusieurs sections remplies par un contacteur 3, un plateau distributeur 2 est disposé au-dessus de chaque section 3. Le contacteur gaz/liquide met en contact le gaz G et le liquide L afin de permettre les échanges.

Les distributeurs standards 2 utilisés dans les colonnes d'absorption/régénération ou encore de distillation sont généralement constitués d'un plateau collecteur/distributeur équipé de cheminées 4 (cf. figure 2). La distribution du liquide se fait par le passage du liquide dans des orifices 5 positionnés sur le bas du plateau 2 et la distribution du gaz se fait par les cheminées 4. Chaque cheminée 4 permet le passage du gaz, selon le mode de fonctionnement contre-courant ou co-courant, de la partie basse de la colonne vers la partie haute de la colonne 1 ou bien de la partie haute vers la partie basse. Les cheminées 4 sont en saillie d'un côté du plateau 2 et sont perpendiculaires à celui-ci. Chaque cheminée 4 est formée de plusieurs parois, par exemple parallélépipédiques ou cylindriques qui délimitent un volume interne qui est ouvert de part et d'autre du plateau 2. Pour éviter que le liquide ne passe dans les cheminées 4, l'ouverture d'échappement ou d'arrivée du gaz au-dessus du plateau (selon le mode de fonctionnement à contre-courant ou à co-courant), est préférentiellement orthogonale à la direction longitudinale de la cheminée 4. L'objectif du plateau distributeur est de distribuer le liquide L de manière homogène sur le contacteur gaz/liquide 3.

Les plateaux équipés de cheminées peuvent être de différents types, et les cheminées peuvent être positionnées suivant différentes configurations. Différentes variantes de plateaux distributeurs sont exposées notamment dans les demandes de brevet et brevets suivants : US6338774B, US2004020238A, US6149136A et US5752538A.

Les colonnes de contact gaz/liquide considérées sont placées sur des structures flottantes, par exemple, de type bateau, plateforme ou encore barge, sensibles à la houle. De ce fait, les équipements installés sur ces unités et notamment les plateaux distributeurs gaz/liquide subissent des mouvements de houle avec jusqu'à six degrés de liberté ("lacet, tangage, roulis, pilonnement, embardé, cavalement").

A titre indicatif, l'angle associé à la combinaison des oscillations de tangage et de roulis peut être de l'ordre de +/- 8° avec une période allant de 10 à 20 s. Les ordres de grandeur des accélérations longitudinale, transversale et verticale alors rencontrées dans la colonne sont respectivement de l'ordre de 0.2 à 0.5 m/s$^2$, 0.8 à 1.5 m/s$^2$ et 0.2 à 0.5 m/s$^2$ à 50 m au-dessus du pont.

Dans ces conditions, le fonctionnement des plateaux distributeurs classiques équipés de cheminées (figure 2) peut être fortement perturbé. En effet, le fonctionnement de ces distributeurs est principalement gravitaire, une garde de liquide de hauteur homogène "h" doit s'établir sur le plateau distributeur. Le carré de la vitesse de passage du liquide par les orifices 5 situés en bas du plateau 2 est proportionnel à la hauteur de la garde liquide ($U_L^2 \propto gh$). Lorsque le plateau 2 est incliné sous l'effet de la houle (figure 3), la hauteur de la garde liquide n'est plus uniforme sur le plateau distributeur ($h_1 > h_2$) ce qui provoque un déséquilibre dans la distribution du liquide en entrée du contacteur gaz/liquide 3. La qualité de distribution et donc l'efficacité de la colonne sont fortement impactées. Cette mal-distribution, si elle n'est pas maitrisée, peut sensiblement dégrader les performances de la colonne. Il faudrait une garde liquide importante pour compenser ces effets, ce qui signifie une augmentation de l'encombrement et du poids qui ne convient pas pour des unités offshore. On appelle garde de liquide, l'interface entre le gaz et le liquide. La hauteur de la garde de liquide correspond au niveau du liquide par rapport à la face supérieure du plateau.

Afin d'éviter ce type de problèmes, des éléments de distribution peu sensibles aux défauts d'horizontalité ont été mis en oeuvre. Ces distributeurs sont généralement constitués d'un collecteur et d'un distributeur reliés par une ou plusieurs conduites verticales relativement longues pour que le distributeur reste en charge quelles que soient les conditions de houle rencontrées. Ces distributeurs sont généralement peu sensibles aux effets de houle et génèrent une bonne qualité de distribution mais sont très encombrants : leur hauteur peut être de plusieurs mètres dans certains cas (US 2004020238 A).

Une autre solution à ces problèmes est décrite dans les brevets FR 2771018 A (US6294053 B1) et FR 2771019 A (US 6395138 B1), elle consiste à utiliser deux distributeurs (primaire et secondaire). Chaque distributeur est divisé en plusieurs compartiments dans lesquels se répartit le liquide. Grâce à ces compartiments, le liquide est mieux réparti lors de l'inclinaison de la colonne. Toutefois, cette solution reste encombrante car elle nécessite deux distributeurs. En outre, les compartiments ne communiquant pas ensemble, la répartition du liquide dans les compartiments n'est pas équilibrée.

Le brevet US 5,132,055, quant à lui, divulgue un plateau distributeur dans lequel les cheminées permettent de compartimenter la zone d'écoulement du liquide. Selon ce document, les cheminées sont alors toutes parallèles. Les compartiments possèdent donc tous une surface différente. En outre, le parallélisme des cheminées ne permet pas d'assurer une bonne distribution et une bonne répartition du liquide sur l'ensemble du plateau. En effet, lorsque l'inclinaison du plateau est parallèle à ces cheminées, la hauteur de la garde de liquide varie de manière importante entre les deux extrémités du plateau.

La demande de brevet FR 2989595 A (US 2013/277868 A) décrit un plateau distributeur sur lequel sont formées des cloisons perforées délimitant des compartiments. Les cloisons perforées permettent de limiter la mauvaise distribution du liquide. Les Documents WO 2005/063352, US 5 683 629 et US2013/277868 décrivent un plateau pour colonne d'échange de chaleur et/ou de matière. L'invention concerne un plateau distributeur comportant au moins deux niveaux de collecte et de distribution de liquide. Pour les forts débits de liquide, une partie du liquide du niveau supérieur passe dans le niveau inférieur, avant d'être distribuée du plateau vers le lit de garnissage par au moins une ouverture placée à la base du niveau inférieur. Une autre partie du liquide contenue dans le niveau supérieur est directement distribuée vers la base du niveau inférieur. L'objectif de l'invention proposée est d'améliorer la flexibilité de fonctionnement en cas d'une large plage de variation du débit liquide, tout en conservant un encombrement réduit.

**Le dispositif selon l'invention**

Ainsi, la présente invention concerne un plateau distributeur pour colonne d'échange de chaleur et/ou de matière selon la revendication 1. Selon un mode préféré de mise en oeuvre de l'invention, un desdits moyens pour le passage dudit liquide au travers de ladite plaque supérieure peut être constitué par des cheminées en saillie de la face supérieure de ladite plaque supérieure.

Avantageusement, lesdits moyens desdites plaques supérieure et inférieure, en communication par ledit conduit pour le passage dudit liquide, peuvent être constitués par des orifices desdites plaques.

Préférentiellement, un desdits moyens pour le passage dudit liquide au travers de ladite plaque supérieure peut être constitué par des orifices de ladite plaque supérieure.

Selon un mode préféré de mise en oeuvre de l'invention, lesdits moyens pour le passage du gaz peuvent être des éléments de distribution de gaz de forme cylindrique, cubique ou parallélépipédique.

Préférentiellement, lesdits moyens pour le passage du gaz peuvent être des éléments de distribution de gaz sous forme de cheminée en saillie de la face supérieure de ladite plaque inférieure et traversant ladite plaque supérieure.

Selon un mode de mise en oeuvre de l'invention, le demi-espace formé au-dessus de ladite première plaque, dit premier niveau, peut être divisé en compartiments au moyen d'au moins une cloison au droit de la face supérieure de la dite première plaque, lesdites cloisons dudit premier niveau comportant au moins une perforation pour permettre l'écoulement d'une partie dudit liquide entre lesdits compartiments dudit premier niveau, et dans lequel l'espace fermé compris entre lesdites première et deuxième plaques, dit second niveau, est divisé en compartiments au moyen d'au moins une cloison.

Selon un mode de mise en oeuvre de l'invention, ledit premier niveau dudit plateau peut comporter plusieurs cloisons sécantes.

Préférentiellement, lesdites cloisons dudit premier niveau peuvent être composées de deux séries de cloisons, lesdites cloisons de chaque série étant parallèles entre elles et sécantes aux cloisons de l'autre série.

De manière très préférée, les cloisons dudit second niveau peuvent être placées symétriquement aux cloisons dudit premier niveau par rapport à ladite plaque supérieure.

Selon un mode de mise en oeuvre de l'invention, lesdites perforations de deux cloisons parallèles dudit premier niveau délimitant un même compartiment peuvent ne pas être alignées.

Préférentiellement, lesdites perforations peuvent être disposées à la base desdites cloisons dudit premier niveau.

Avantageusement, lesdites cloisons dudit premier niveau peuvent avoir une hauteur supérieure ou sensiblement égale à la hauteur dans ledit premier niveau desdits moyens de distribution de gaz.

Selon un mode de mise en oeuvre de l'invention, les dimensions $L_{c1}$ et $L_{c2}$ d'un compartiment dudit premier niveau peuvent être comprises entre 100 et 1000 mm.

Selon un mode de mise en oeuvre de l'invention, ledit premier niveau peut comporter au moins un compartiment de rétention situé en périphérie du distributeur.

En outre, l'invention concerne une colonne d'échange de chaleur et/ou de matière entre un gaz et un liquide, dans laquelle les deux fluides sont mis en contact au moyen d'un garnissage. Ladite colonne comporte au moins un plateau distributeur selon l'invention pour distribuer lesdits fluides sur ledit garnissage.

L'invention concerne également une barge flottante, notamment pour la récupération d'hydrocarbures, qui comprend au moins une colonne selon l'invention.

De plus, l'invention concerne l'utilisation d'une colonne selon l'invention pour un procédé de traitement de gaz, de captage de $CO_2$, de distillation ou de transformation d'air.

**Présentation succincte des figures**

D'autres caractéristiques et avantages du procédé selon l'invention, apparaîtront à la lecture de la description ci-après d'exemples non limitatifs de réalisations, en se référant aux figures annexées et décrites ci-après.

La figure 1, déjà décrite, illustre le cas particulier d'une colonne de traitement de gaz ou de capture de $CO_2$ équipée d'un plateau distributeur en tête de colonne.

La figure 2, déjà décrite, illustre un plateau distributeur selon l'art antérieur.

La figure 3, déjà décrite, illustre un plateau distributeur incliné selon l'art antérieur.

La figure 4 illustre une vue partielle d'un plateau distributeur selon un mode de réalisation de l'invention.

La figure 5 illustre un plateau distributeur en position inclinée selon un mode de réalisation de l'invention.

La figure 6 illustre le fonctionnement d'un plateau distributeur selon un mode de réalisation de l'invention en fonction du débit de liquide.

La figure 7 est une courbe comparative entre un plateau distributeur selon l'invention et un plateau distributeur selon l'art antérieur.

La figure 8 illustre une variante de réalisation du plateau distributeur selon l'invention.

La figure 9 illustre une variante de réalisation du plateau distributeur selon l'invention.

La figure 10 illustre une variante de réalisation du plateau distributeur selon l'invention.

**Description détaillée de l'invention**

L'invention concerne un plateau distributeur pour colonne d'échange de chaleur et/ou de matière entre un gaz et un liquide, comportant au moins un moyen de distribution du gaz au travers du plateau, une plaque supérieure et une plaque inférieure, chacune des plaques comportant au moins deux moyens distincts pour le passage du liquide au travers de ladite plaque.

Selon l'invention, les ouvertures des moyens de la plaque supérieure sont situées à des côtes distinctes, et au moins le moyen de la plaque supérieure ayant la côte la moins élevée communique avec un des moyens pour le passage du liquide de la plaque inférieure par un conduit d'alimentation.

On appelle plaque supérieure la plaque du plateau selon l'invention située à la côte la plus élevée et plaque inférieure la plaque du plateau selon l'invention située à la côte la moins élevée. Les côtes sont évaluées lorsque le plateau est en position non inclinée et le long d'un axe vertical traversant les plaques constituant le plateau.

Selon l'invention, un premier moyen pour le passage de liquide, appelé « moyen avec ouverture haute » par la suite, de la plaque supérieure comporte une ouverture dont la côte est supérieure à la côte de l'ouverture d'un second moyen, appelé « moyen avec ouverture basse » par la suite, de la plaque supérieure.

Selon l'invention, le moyen avec ouverture basse pour le passage du liquide de la plaque supérieure communique avec un moyen pour le passage dudit liquide de la plaque inférieure par un conduit d'alimentation.

Selon l'invention, le moyen de distribution de gaz au travers du plateau traverse à la fois les plaques supérieure et inférieure du plateau.

Ainsi décrite, l'invention comporte deux niveaux de collecte et de distribution du liquide :

- Un premier niveau, dit niveau supérieur par la suite, constitué par le demi-espace formé au-dessus de la plaque supérieure, dans lequel le liquide arrivant de la colonne de traitement de gaz est collecté puis distribué via au moins deux moyens pour le passage de liquide au travers de la plaque supérieure,

  o Un premier moyen, à ouverture haute, permettant le passage du liquide contenu dans le niveau supérieur au travers de la plaque supérieure ;
  o Un deuxième moyen, à ouverture basse, prolongé par un conduit, jusqu'à un moyen de la plaque inférieure pour le passage de liquide au travers de la plaque inférieure, permettant le passage du liquide contenu dans le niveau supérieur jusque sous la plaque inférieure. Ainsi, une partie du liquide contenu dans le niveau supérieur traverse l'ensemble du plateau ;

- Un deuxième niveau, dit niveau inférieur par la suite, constitué par l'espace formé entre les deux plaques dans lequel le liquide arrivant du niveau supérieur, par le moyen à ouverture haute permettant le passage du liquide contenu dans le niveau supérieur au travers de la plaque supérieure, est collecté puis distribué via un moyen pour le passage de liquide au travers de la plaque inférieure. Selon un mode de mise en oeuvre de l'invention, le niveau inférieur du plateau est uniquement alimenté en liquide par le moyen à ouverture haute situé dans le niveau supérieur.

Ainsi décrit, le plateau distributeur selon l'invention permet à une partie du liquide contenu dans le niveau supérieur de traverser l'ensemble du plateau, via un conduit d'alimentation joignant les deux plaques, et à une autre partie de ce liquide d'être tout d'abord distribué dans le niveau inférieur dudit plateau, avant d'être distribué sous ledit plateau.

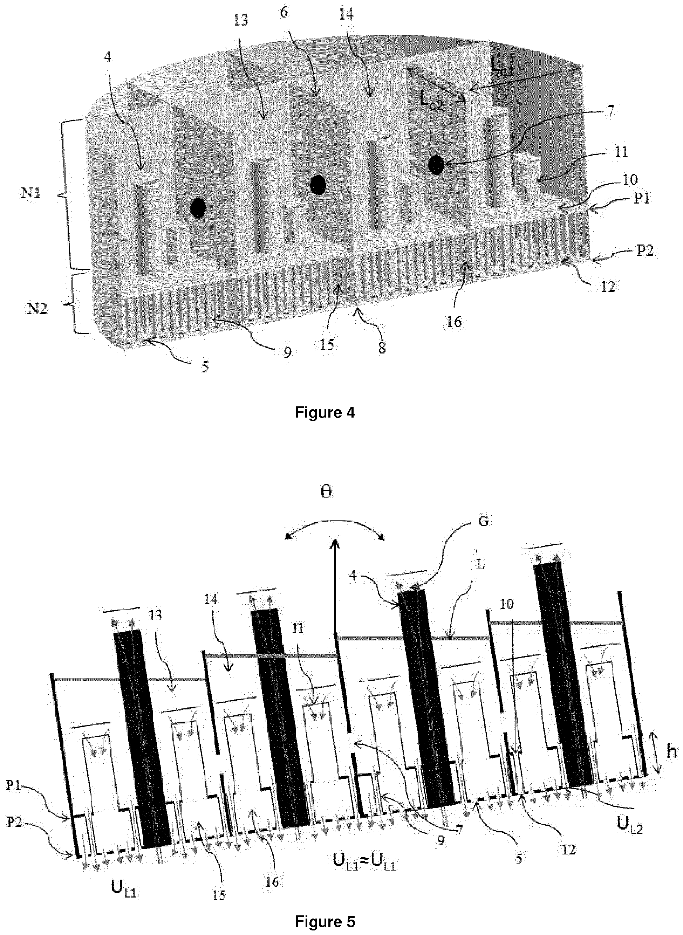

La figure 4 illustre un plateau distributeur 2 selon un mode de réalisation de la présente invention. Il s'agit d'une vue isométrique d'un plateau coupé selon un diamètre du plateau. L'autre partie du plateau se déduit par symétrie, avec une cloison au niveau du plan de coupe. La figure 4 décrit un plateau distributeur 2 constitué par une plaque supérieure P1 et une plaque inférieure P2, délimitant un niveau supérieur N1 et un niveau inférieur N. Le moyen 11 pour le passage de liquide avec ouverture haute de la plaque supérieure P1 comporte une ouverture dont la côte est supérieure à la côte de l'ouverture du second moyen 10 avec ouverture basse de la plaque supérieure. Le moyen 10 avec ouverture basse pour le passage du liquide de la plaque supérieure P1 communique avec un moyen 12 pour le passage dudit liquide de la plaque inférieure P2 par un conduit d'alimentation 9. Le moyen de distribution de gaz 4 au travers du plateau traverse à la fois les plaques supérieure P1 et inférieure P2 du plateau.

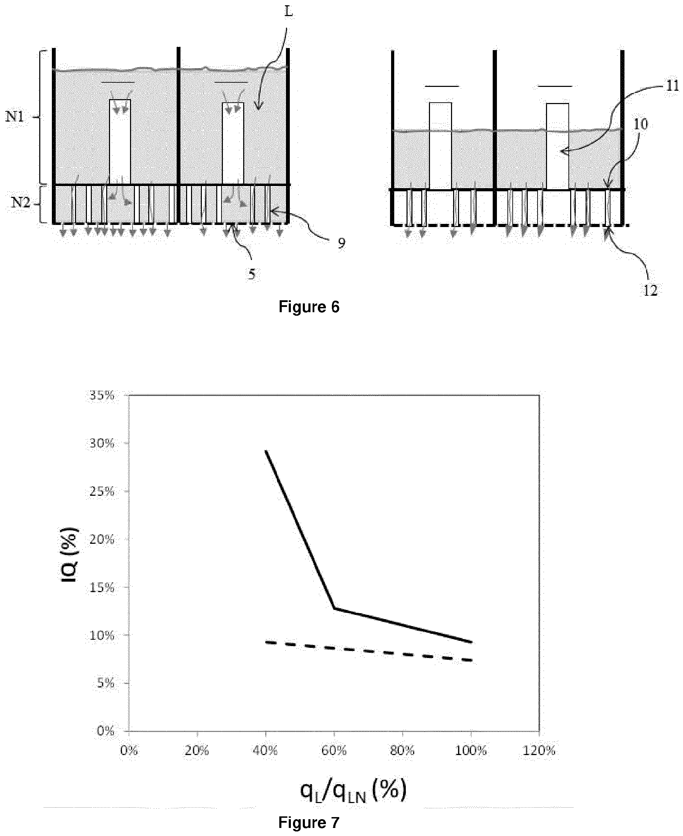

Telle que décrite, la présente invention permet une bonne flexibilité du plateau distributeur, en étant adapté à différents débits. En effet, lorsque le débit de liquide est élevé, la hauteur de garde du liquide dans le niveau supérieur N1 sur le plateau 2 (hauteur du liquide par rapport à la base du niveau supérieur N1 du plateau, et donc par rapport à la plaque supérieure P1) est élevée et peut être au-dessus du moyen 11 pour le passage de liquide de la plaque supérieure (mode dit nominal ; Figure 6a) ; une partie du liquide du niveau supérieur N1 est alors distribuée via ce moyen 11 dans le niveau inférieur N2, et l'autre partie du liquide du niveau supérieur N1 est distribuée directement sous le plateau distributeur via le conduit 9 traversant le niveau inférieur N2. En cas de faible débit de liquide, le niveau de liquide contenu dans le niveau supérieur N1 peut être en-dessous de l'ouverture de l'ouverture de la cheminée 11 (mode dit « turn-down », ou régime de fonctionnement bas en français ; Figure 6b) ; le liquide contenu dans le niveau supérieur N1 est alors distribué directement sous le plateau distributeur, via le conduit 9 traversant le niveau inférieur N2 ; ainsi, en mode turn-down, il n'y a pas de liquide contenu dans le niveau inférieur N2 du plateau. Ainsi, la présente invention permet de maintenir une garde liquide suffisamment haute pour ne pas dégrader la qualité de la distribution du liquide sous l'effet du mouvement oscillant lié à la houle.

Ainsi, par ses deux niveaux d'ouverture des moyens 10, 11, pour le passage du liquide du niveau supérieur N1, et l'existence d'un niveau inférieur N2 de collecte et de distribution faisant office de régulateur de hauteur de garde liquide en cas de fort débit de liquide, le plateau distributeur selon l'invention permet une meilleure flexibilité de fonctionnement que l'art antérieur (en comparaison par exemple du brevet FR 2989595 A (US 2013/277868 A)), tout en offrant un encombrement minimum (en comparaison par exemple des demandes FR 2771018 A et FR 2771019 A qui nécessitent deux plateaux distincts, un plateau primaire et un plateau secondaire). En effet, la hauteur du niveau inférieur du plateau de distribution selon l'invention peut être très faible, de l'ordre de quelques centimètres.

Avantageusement, le passage du liquide depuis le niveau supérieur N1 au travers de tout le plateau (c'est-à-dire sans être distribué dans le niveau inférieur N2) est assuré par un conduit d'alimentation 9 dont l'une des extrémités est un orifice 10 percé sur la plaque supérieure P1, et l'autre extrémité est un orifice 12 percé sur la plaque inférieure P2. Préférentiellement, les conduits 9 auront une forme cylindrique, mais peuvent être à section triangulaire ou carré, les orifices 10 et 12 de chaque conduit ayant alors des formes concordantes. De plus, les conduits 9 peuvent être de même taille ou de tailles différentes, les orifices 10 et 12 de chaque conduit 9 ayant des dimensions concordantes. Les conduits 9 peuvent avoir un pas triangulaire ou carré.

Préférentiellement, le moyen 5 pour le passage de liquide contenu dans le niveau inférieur N2 au travers de la plaque inférieure P2, et donc sous le plateau distributeur, est constitué par des orifices percés sur la plaque inférieure P2. Les orifices 5 peuvent avoir un pas triangulaire ou carré. De plus, les orifices 5 peuvent être de même taille ou de tailles différentes.

Selon un mode de réalisation de l'invention, les deux plaques P1 et P2 sont horizontales, parallèles entre elles, et distantes d'une distance h. Dans ce cas, la longueur du conduit est égale à la distance h entre les deux plaques P1 et P2. Selon un mode de réalisation de la présente invention, la distance h entre les plaques P1, P2, du plateau, est comprise entre 30 et 500 mm, préférentiellement entre 50 et 200 mm.

Selon une caractéristique de l'invention, les moyens de distribution de gaz 4 peuvent être cylindriques, cubiques, parallélépipédiques, ou de toute forme analogue. Selon un mode de réalisation de l'invention, les moyens pour le passage du gaz sont des cheminées 4. De plus, le pas des cheminées sur le plateau peut être un pas triangulaire ou carré.

Selon un mode de réalisation de la présente invention, les moyens 11 à ouverture haute pour le passage de liquide contenu dans le niveau supérieur N1 vers le niveau inférieur N2 peuvent être de hauteurs différentes et/ou peuvent comporter des ouvertures latérales à des hauteurs différentes, de manière à rendre le plateau distributeur flexible. Selon un mode de réalisation de la présente invention, les ouvertures des moyens 11 à ouverture haute pour le passage de liquide contenu dans le niveau supérieur N1 vers le niveau inférieur N2 peuvent être des fentes ou des orifices.

La hauteur des moyens 11 à ouverture haute pour le passage de liquide contenu dans le niveau supérieur N1 vers le niveau inférieur N2 est avantageusement inférieure à la hauteur des cheminées pour le passage de gaz 4.

Selon un mode de mise en oeuvre de la présente invention, les moyens 11 pour le passage de liquide peuvent avoir des formes différentes cylindriques, cubiques, parallélépipédiques, ou de toute forme analogue.

Préférentiellement, les moyens 11 pour le passage de liquide contenu dans le niveau supérieur N1 vers le niveau inférieur N2 sont des cheminées.

Selon un mode de réalisation de la présente invention, le niveau supérieur N1 est compartimenté en plaçant au moins une cloison 6 sur la face supérieure de la plaque supérieure P1, et le niveau inférieur N2 est compartimenté en plaçant au moins une cloison 8 sur la face supérieure de la plaque inférieure P2. Les cloisons 6 du niveau supérieur N1 génèrent des compartiments 13, 14, de liquide, qui servent de "barrière" lorsque le plateau est incliné. Les cloisons 8 du niveau inférieur N2 génèrent des compartiments 15, 16, de liquide, qui permettent bloquer le mouvement latéral du liquide et assurer ainsi que le compartiment reste en charge lorsque le plateau est incliné, en cas de forts débit de fluide. De plus, les cloisons du niveau supérieur comporte au moins une perforation 7 pour permettre l'écoulement du fluide entre les compartiments 13, 14, du niveau supérieur N1, ce qui assure une bonne répartition radiale du liquide dans la totalité du niveau supérieur N1 du plateau distributeur. Les perforations 7 peuvent être circulaires, oblongues, rectangulaires, etc. Toutefois, la surface des perforations 7 peut, de préférence, rester faible par rapport à la surface des cloisons du niveau supérieur, et ce afin que les cloisons 6 du niveau supérieur N1 continuent de jouer leur rôle principal : limiter la quantité de fluide s'écoulant sur le niveau supérieur du plateau, afin de garantir une bonne homogénéité de la hauteur du liquide sur le niveau supérieur du plateau. Ainsi, on maintient une garde de liquide relativement homogène même avec une inclinaison importante. Une bonne qualité de distribution du liquide sur le contacteur gaz/liquide est de ce fait garantie.

Selon un mode de réalisation de la présente invention, les cloisons 8 du niveau inférieur N2 sont placées en symétrie des cloisons 6 du niveau supérieur N1 par rapport à la plaque supérieure P1. Le nombre de compartiments dans les deux niveaux est alors identique et les compartiments du niveau inférieur 15, 16, ont les mêmes limites latérales que les compartiments 13, 14, du niveau supérieur N1.

La Figure 5 illustre un plateau distributeur dans une position inclinée comportant deux niveaux N1, N2, de collecte et de distribution du liquide constitués chacun de quatre compartiments de mêmes dimensions, les compartiments 13, 14, du niveau supérieur N1 pouvant communiquer via des perforations 7 placées dans les cloisons 6 des compartiments. Par comparaison avec la Figure 3, la hauteur de la garde de liquide varie moins, donc les vitesses de sortie du liquide $U_{L1}$ et $U_{L2}$ diffèrent peu. Par conséquent, la distribution est plus homogène qu'avec le plateau distributeur selon l'art antérieur.

Selon un mode de réalisation de la présente invention, une cheminée pour le passage de gaz au travers de tout le plateau est placée dans certains compartiments. Selon un autre mode de réalisation de la présente invention, une cheminée pour le passage de gaz au travers de tout le plateau est placée dans chaque compartiment du niveau supérieur N1, et se prolonge dans le niveau inférieur N2, et ce jusqu'à la base de la plaque inférieure P1 plateau.

Selon un mode de réalisation préféré de l'invention, au moins un moyen 11 à ouverture haute pour le passage de liquide au travers la plaque supérieure P1 est placé dans chaque compartiment du niveau supérieur N1.

Selon un mode de réalisation préféré de l'invention, chaque compartiment 13, 14 du niveau supérieur N1 comporte au moins un, préférentiellement plusieurs, moyens 10 de passage pour le liquide contenu dans le niveau supérieur N1, se prolongeant par un conduit 9 traversant le niveau inférieur N2, ledit conduit aboutissant à un moyen 12 pour le passage du liquide au travers de la plaque inférieure P2.

Selon le mode de réalisation de l'invention illustré à la Figure 4, les cloisons 6, 8 d'un niveau de collecte et distribution N1, N2 sont réparties en deux séries (ou ensembles) de cloisons. Dans chaque série, les cloisons sont parallèles entre elles, écartées régulièrement d'une longueur $L_{c1}$, et sécantes aux cloisons de l'autre série, qui sont écartées régulièrement d'une longueur $L_{c2}$. Ainsi, les compartiments de collecte et de distribution du niveau supérieur 13, 14, les compartiments de collecte et de distribution du niveau inférieur 15, 16 ont sensiblement une forme de parallélogramme, et selon l'exemple illustré de rectangle. Avantageusement, selon ce mode de réalisation, les cloisons 6 ont une hauteur supérieure, inférieure ou sensiblement égale à la hauteur des cheminées 4 dans le niveau supérieur. Cette hauteur est suffisante pour assurer une bonne qualité de distribution, tout en limitant l'encombrement. Chaque compartiment de distribution 13, 14, du niveau supérieur N1 et son compartiment symétrique 15, 16, dans le niveau inférieur N2 comportent une seule et même cheminée de gaz 4. Selon ce mode de réalisation, on peut choisir un écartement $L_{c1}$ et $L_{c2}$ sensiblement égal à la distance séparant deux cheminées voisines.

Selon un mode de mise en oeuvre de l'invention, on calcule la distance maximale $L_{ci\_max}$ (en mm), avec i valant 1 ou 2, entre deux cloisons consécutives selon une formule du type :

$$L_{ci\_max} = \frac{50}{2\tan\theta},$$

où $\theta$ est un angle d'inclinaison maximale, imposé par les conditions marines. Très préférentiellement, les dimensions $L_{c1}$ et $L_{c2}$ d'un compartiment sont comprises entre 100 et 1000 mm.

Selon un mode de réalisation de l'invention, chaque cloison 6 du niveau supérieur N1 contient une unique perforation 7. De plus, selon ce mode de réalisation, pour empêcher un écoulement linéaire du fluide et pour assurer une bonne dispersion radiale du liquide dans le niveau supérieur N1, les perforations 7 de deux parois parallèles d'un compartiment de distribution 13 du niveau supérieur ne sont préférentiellement pas alignées (ou coaxiales), c'est-à-dire qu'une droite qui passe par les centres de perforations de deux cloisons parallèles du niveau supérieur N1, n'est pas parallèle à une des cloisons du compartiment 13 du niveau supérieur N1. Avantageusement, les perforations 7 sont placées dans la partie inférieure des cloisons 6 du niveau supérieur N1, de sorte à être toujours situées sous la hauteur de la garde de liquide.

Le nombre de compartiments par niveau de collecte et de distribution (et par conséquent le nombre de cloisons par niveau de distribution) peut être dépendant du diamètre du plateau. De préférence, un plateau de grande dimension est plus compartimenté qu'un plateau de plus petite dimension.

Selon une variante de la mise en oeuvre de l'invention, on peut utiliser au moins une des caractéristiques suivantes :

- les compartiments 13, 14, du niveau supérieur N1 et leurs compartiments 15,16, en symétrie dans le niveau inférieur N2 peuvent comporter plusieurs cheminées pour le passage du gaz 4 ;
- les compartiments du niveau supérieur N1, et donc ceux du niveau inférieur N2, ont une forme triangulaire ; pour ce mode de réalisation, on peut disposer trois séries de cloisons dans chaque niveau, les cloisons d'une même série étant parallèles entre elles, et sécantes aux cloisons des autres séries ;
- les compartiments du niveau supérieur N1, et donc ceux du niveau inférieur N2, ont une forme hexagonale (par exemple du type alvéole de ruche) ;
- les perforations 7 de deux côtés en face à face d'un compartiment 13, 14, du niveau supérieur N1 sont alignées ;
- chaque cloison 6 du niveau supérieur N1 comporte plusieurs perforations 7.

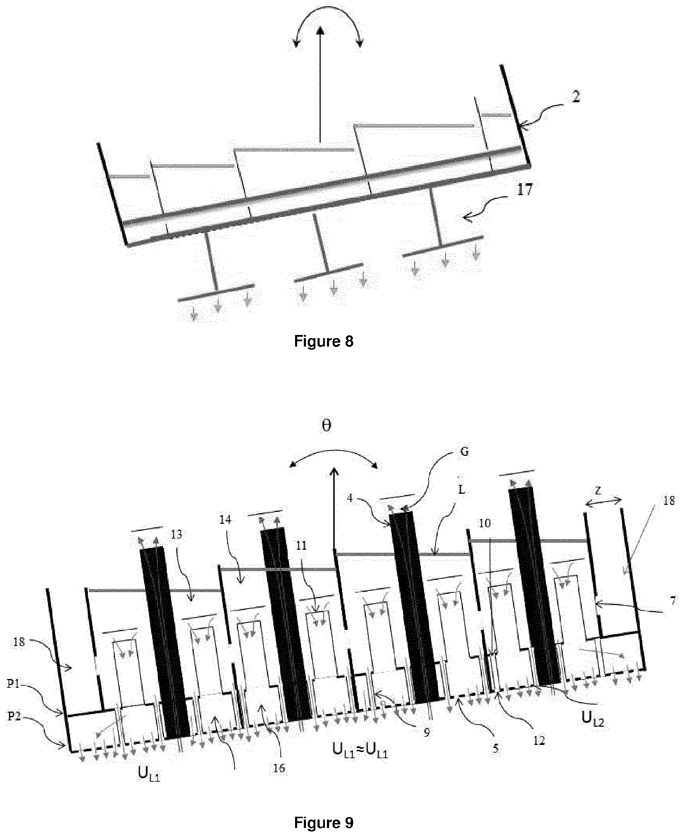

De plus, selon une variante de réalisation de l'invention, le plateau distributeur 2 peut comprendre un système de distribution secondaire du liquide (Figure 8). Le système de distribution secondaire est en saillie de la face inférieure du plateau et sert à distribuer sur le garnissage le liquide en provenance des moyens de passage du liquide. Le système de distribution secondaire améliore la qualité de distribution de liquide en orientant la distribution du liquide sur le garnissage. Selon un mode particulier de mise en oeuvre de l'invention, le système de distribution secondaire peut comprendre des déflecteurs 17 qui orientent la distribution du liquide. Alternativement, le système de distribution secondaire peut comprendre un ensemble d'arroseurs (ensemble de plusieurs conduites disposées en parallèle et équipées d'orifices), des cheminées en saillie sur la partie inférieure du plateau distributeur, et/ou un ensemble de conduites perforées disposées en parallèle sous le plateau distributeur.

En outre, selon une variante de réalisation de l'invention, le niveau supérieur N1 du plateau distributeur 2 comporte au moins un compartiment de rétention 18 (Figure 9). Un compartiment de rétention est formé par des cloisons 6 placées dans le niveau supérieur et ne comporte aucun moyen pour le passage du liquide. De préférence, le compartiment de rétention 18 ne comporte aucun moyen pour le passage du gaz à travers le plateau. Les cloisons 6 des compartiments de rétention 18 sont également perforées. Selon l'invention, les compartiments de rétention 18 sont situés en périphérie du niveau supérieur N1 du plateau 2. Selon un aspect de l'invention, tous les compartiments situés à la périphérie du niveau supérieur N1 du plateau 2 sont des compartiments de rétention 18 et les autres compartiments sont des compartiments de distribution 13,14. Un compartiment de rétention permet d'atténuer l'accumulation et la diminution du liquide lors des oscillations induites par des mouvements du plateau imposées par le milieu marin, et d'assurer ainsi une bonne qualité de distribution du liquide.

Pour tous les modes de réalisation de l'invention, les dimensions du plateau et de ses composants peuvent vérifier les intervalles suivants :

- le pas P des cheminées de gaz 4 est compris entre 50 et 500 mm, préférentiellement entre 100 et 300 mm,
- le plateau de distribution 2 a une hauteur comprise entre 100 et 2000 mm, de préférence entre 600 et 1000 mm,
- le diamètre du plateau 2 est compris entre 300 et 10000 mm,
- si la forme des éléments 4 est cylindrique, le diamètre $d_c$ est compris entre 50 et 500 mm,
- la hauteur des cheminées 4 est comprise entre 300 et 2000 mm, de préférence entre 400 et 700 mm,
- la distance au bord minimum des cheminées 4 est comprise entre 50 et 400 mm, et de préférence entre 100 et 200 mm,
- la hauteur des cloisons 6 est comprise entre 100 et 2000 mm, de préférence entre 700 et 1000 mm,
- le diamètre $d_{or}$ des perforations 7 est compris entre 5 et 100 mm, de préférence entre 30 et 50 mm.
- La largeur des compartiment de rétention Z est compris entre 40 et 300 mm.

Ces différentes variantes de réalisation du plateau distributeur selon l'invention peuvent être combinées entre elles, notamment les variantes de réalisation des Figures 5 et 8 ; par exemple des cheminées 11 peuvent être reliées à des déflecteurs 12.

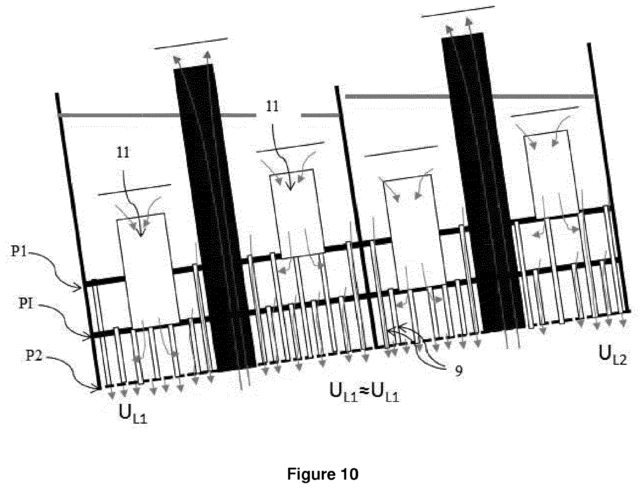

Selon un mode particulier de mise en oeuvre de la présente invention, le plateau distributeur comporte une troisième plaque (Figure 10), dite plaque intermédiaire PI, placée entre les plaques supérieure P1 et inférieure P2, et comportant également deux moyens distincts pour le passage de liquide. Dans ce cas, des moyens de passage pour le liquide à ouverture haute (11) peuvent être en saillie non seulement la plaque supérieure P1 mais aussi de la plaque intermédiaire PI, et certains conduits 9 d'alimentation peuvent distribuer le liquide depuis la plaque supérieure P1 jusqu'à la plaque inférieure P2, et d'autres conduits 9 peuvent distribuer le liquide depuis la plaque intermédiaire PI jusqu'à la plaque inférieure P2.

L'invention concerne également une colonne 1 d'échange de matière et/ou de chaleur entre deux fluides, dans laquelle deux fluides sont mis en contact au moyen d'un contacteur gaz/liquide 3, la colonne 1 comprenant au moins une première entrée d'un fluide liquide, au moins une deuxième entrée d'un fluide gazeux, au moins une première sortie d'un fluide gazeux et au moins une deuxième sortie d'un fluide liquide. La colonne 1 comporte en outre un plateau distributeur 2 tel que décrit ci-dessus, pour permettre la distribution des fluides sur le contacteur 3.

La colonne 1 est avantageusement une colonne de lavage aux amines mais elle est adaptée à tout type de solvants.

De manière avantageuse, le contacteur gaz/liquide 3 est un lit de garnissage structuré ou vrac.

En outre, l'invention concerne une barge flottante offshore, notamment du type FPSO ou FLNG, notamment pour la production et le traitement d'hydrocarbures. La barge comprend une colonne d'échange de matière et/ou de chaleur entre un gaz et un liquide tel que décrit ci-dessus. La colonne peut faire partie d'une unité de traitement de gaz et/ou de captage de $CO_2$ pour nettoyer des gaz produits (ou fumées).

La colonne selon l'invention peut être utilisée dans des procédés de traitement de gaz, de captage de $CO_2$, de distillation ou de transformation de l'air.

**Exemple comparatif**

Pour illustrer les avantages de la présente invention, on se propose de comparer les résultats obtenus par l'invention (mode de réalisation de la figure 4) à ceux obtenus par un plateau distributeur selon l'art antérieur tel que décrit dans la demande de brevet FR 2989595 A (US 2013/277868 A). Les propriétés des plateaux selon l'invention et selon l'art antérieur sont décrites ci-après :

Propriétés du plateau selon l'art antérieur

- Nombre de niveaux de distribution : 1
- Nombre de compartiments : 120
- Diamètre du plateau distributeur : 4000 mm
- Diamètre des cheminées de gaz : 100 mm
- Hauteur des cheminées de gaz : 600 mm

- Nombre de cheminées de gaz : 120
- Longueur des compartiments de distribution $L_{c1}$ x $L_{c2}$ : 300 x 300 mm
- Ouverture de la cloison : environ 1 %
- Débit de liquide en mode nominal : 100 m$^3$/m$^2$/h
- Débit de liquide en mode « turn-down » : 40 m$^3$/m$^2$/h

Propriétés du plateau selon l'invention (figure 4) :

- Nombre de niveaux de distribution : 2
- Nombre de compartiments par niveau de distribution : 120
- Diamètre du plateau distributeur : 4000 mm
- Diamètre des cheminées de gaz : 100 mm
- Hauteur des cheminées de gaz : 600 mm
- Nombre de cheminées de gaz : 120
- Longueur des compartiments de distribution $L_{c1}$ x $L_{c2}$ : 300 x 300 mm
- Ouverture de la cloison : environ 1 %
- Débit de liquide en mode nominal : 100 m$^3$/m$^2$/h
- Débit de liquide en mode « turn-down » : 40 m$^3$/m$^2$/h

On utilise une approche numérique de type CFD (de l'anglais Computational Fluid Dynamics pouvant être traduit par mécanique des fluides numérique) qui consiste à étudier les mouvements d'un fluide par la résolution numérique des équations de conservation de la masse et bilan de quantité de mouvement (équations de Navier-Stokes). L'approche numérique utilisée est de type suivi d'interface (VOF pour Volume of Fluid : volume de fluide) décrite dans Hirt & Nichols, JCP 39, 201-225 (1981). Cette méthode, bien connue par l'homme du métier, est bien adaptée pour simuler le changement de topologie d'interface rencontré dans le distributeur soumis au mouvement de la houle (détachement, recollement d'interface, formation de déferlante ...). L'évolution de l'écoulement diphasique est décrite par les équations de conservation de la masse, de conservation de quantité de mouvement, et par l'équation de transport du taux de présence. Les calculs ont été réalisés avec le logiciel commercial Fluent 14.5 ® (ANSYS, Etats-Unis).

Pour l'ensemble des calculs CFD d'évaluation présentés ci-après, l'angle associé au mouvement de roulis simulé est de +/- 5° avec une période de 15 s. Les propriétés des fluides sont : $\rho_L$ = 1000 kg/m3, $\mu_L$ = 1 cP, $\rho_G$ = 1,2 kg/m3, $\mu_G$ = 0,018 cP. Une distance au point de giration de la plateforme offshore de 50 m est prise en compte dans les calculs. Cette distance correspond aux distributeurs situés en tête de colonne, exposés aux plus fortes accélérations. Enfin, les effets capillaires sont supposés négligeables.

On rappelle que l'efficacité de distribution du système proposé est comparée à celle d'un plateau distributeur selon l'art antérieur dans le cas où le plateau est soumis aux mouvements de la houle. Pour quantifier la sensibilité au milieu marin d'un plateau, on peut calculer un indice de déséquilibre IQ (exprimé en pourcentage) définit par une formule du type :

$$IQ(\%) = \frac{q_{L,\max} - q_{L,\min}}{q_{L,moyen}} \times 100$$

avec : $q_{L,\max}$ : le débit de liquide maximum sortant d'un des compartiments du distributeur, $q_{L,\min}$ et le débit de liquide minimum sortant d'un des compartiments du distributeur et $q_{L,moyen}$ est le débit moyen sortant du distributeur. Une faible valeur d'indice de déséquilibre liquide indique une faible sensibilité de la distribution aux effets de la houle. A l'inverse, une valeur élevée de cet indice IQ indique un fort déséquilibre de distribution.

La figure 7 compare, pour les deux plateaux distributeurs, l'évolution de l'indice de déséquilibre IQ, moyenné sur une période d'oscillation, en fonction du débit de liquide ($q_L$) normalisé par le débit de liquide en mode nominal ($q_{LN}$). Ainsi, un rapport $q_L/q_{LN}$ élevé signifie que l'on est proche du fonctionnement en mode nominal (débits de liquide en mode de fonctionnement optimal, environ 80% du temps de fonctionnement de l'unité) et un rapport $q_L/q_{LN}$ faible indique un fonctionnement prépondérant en mode turn-down (débits de liquide faible).

Pour le plateau distributeur selon l'art antérieur FR 2989595 A (US 2013/277868 A), l'indice de déséquilibre moyen (courbe en trait plein) augmente sensiblement avec la diminution du débit de liquide, ce qui indique une faible flexibilité. En effet, la qualité de distribution est sensiblement dégradée (IQ=29%) en fonctionnement en mode turn-down.

Le plateau distributeur selon la présente invention (courbe en tirets) offre une bonne qualité de distribution, qui reste stable avec la diminution du débit de solvant, ce qui indique une très bonne flexibilité. En effet, l'indice de déséquilibre moyen reste inférieur à 10% en mode en fonctionnement en mode turn-down. Cet exemple montre que le dispositif revendiqué permet d'améliorer l'efficacité de distribution de en milieu flottant la flexibilité de fonctionnement. On peut aussi remarquer qu'à 100% du débit nominal, l'indice de déséquilibre moyen est meilleur avec distributeur selon l'invention. Cela est dû à une hauteur de garde liquide plus élevée au débit nominal dans le nouveau distributeur.

## Revendications

1. Plateau distributeur (2) pour colonne d'échange (1) de chaleur et/ou de matière entre un gaz et un liquide comprenant des moyens pour le passage du gaz à travers ledit plateau, **caractérisé en ce que** ledit plateau (2) comprend une plaque supérieure (P1) et une plaque inférieure (P2), chacune desdites plaques (P1, P2) comportant au moins deux moyens (5,10,11,12) distincts pour le passage dudit liquide au travers de ladite plaque, les ouvertures desdits moyens (10,11) de ladite plaque supérieure (P1) étant situées à des hauteurs distinctes, au moins un moyen (10) de ladite plaque supérieure (P1) ayant l'ouverture la moins haute communiquant avec un desdits moyens (12) pour le passage dudit liquide de ladite plaque inférieure (P2) par un conduit d'alimentation (9), lesdits moyens pour le passage du gaz correspondant à des éléments de distribution de gaz sous forme de cheminées en saillie de la face supérieure de ladite plaque inférieure (P2) et traversant ladite plaque supérieure (P1), la hauteur desdits moyens de passage (11) pour le passage dudit liquide de ladite plaque supérieure (P1) ayant l'ouverture la plus haute étant inférieure à la hauteur desdites cheminées pour le passage de gaz (4).

2. Plateau selon la revendication 1, dans lequel un desdits moyens (11) pour le passage dudit liquide au travers de ladite plaque supérieure (P1) est constitué par des cheminées en saillie de la face supérieure de ladite plaque supérieure (P1).

3. Plateau selon l'une des revendications précédentes, dans lequel lesdits moyens (10, 12) desdites plaques supérieure et inférieure (P1, P2), en communication par ledit conduit (9) pour le passage dudit liquide, sont constitués par des orifices desdites plaques (P1, P2).

4. Plateau selon l'une des revendications précédentes, dans lequel un desdits moyens (5) pour le passage dudit liquide au travers de ladite plaque supérieure (P2) est constitué par des orifices de ladite plaque supérieure (P2).

5. Plateau selon l'une des revendications précédentes, dans lequel lesdits moyens (4) pour le passage du gaz sont des éléments de distribution de gaz de forme cylindrique, cubique ou parallélépipédique.

6. Plateau selon l'une des revendications précédentes, dans lequel le demi-espace formé au-dessus de ladite première plaque (P1), dit premier niveau (N1), est divisé en compartiments (13, 14) au moyen d'au moins une cloison (6) au droit de la face supérieure de la dite première plaque (P1), lesdites cloisons (6) dudit premier niveau (N1) comportant au moins une perforation (7) pour permettre l'écoulement d'une partie dudit liquide entre lesdits compartiments (13,14) dudit premier niveau (N1), et dans lequel l'espace fermé compris entre lesdites première et deuxième plaques (P1,P2), dit second niveau (N2), est divisé en compartiments (15,16) au moyen d'au moins une cloison (8).

7. Plateau selon la revendication 6, dans lequel ledit premier niveau (N1) dudit plateau (2) comporte plusieurs cloisons (6) sécantes.

**8.** Plateau selon l'une des revendications 6 à 7, dans lequel lesdites cloisons (6) dudit premier niveau (N1) sont composées de deux séries de cloisons (6), lesdites cloisons (6) de chaque série étant parallèles entre elles et sécantes aux cloisons (6) de l'autre série.

**9.** Plateau selon l'une des revendications 6 à 8, dans lequel les cloisons (8) dudit second niveau (N2) sont placées symétriquement aux cloisons dudit premier niveau (N1) par rapport à ladite plaque supérieure (P1).

**10.** Plateau selon la revendication 8, dans lequel lesdites perforations (7) de deux cloisons (6) parallèles dudit premier niveau (N1) délimitant un même compartiment (13, 14) ne sont pas alignées.

**11.** Plateau selon l'une des revendications 6 à 10, dans lequel lesdites perforations (7) sont disposées à la base desdites cloisons (6) dudit premier niveau (N1).

**12.** Plateau selon l'une des revendications 6 à 11 dans lequel lesdites cloisons (6) dudit premier niveau (N1) ont une hauteur supérieure ou sensiblement égale à la hauteur dans ledit premier niveau (N1) desdits moyens de distribution de gaz (4).

**13.** Plateau selon l'une des revendications 6 à 12, dans lequel les dimensions $L_{c1}$ et $L_{c2}$ d'un compartiment (13, 14) dudit premier niveau (N1) sont comprises entre 100 et 1000 mm.

**14.** Plateau selon l'une des revendications 6 à 13, dans duquel ledit premier niveau (N1) comporte au moins un compartiment de rétention situé en périphérie du distributeur.

**15.** Colonne d'échange de chaleur et/ou de matière entre un gaz et un liquide, dans laquelle les deux fluides sont mis en contact au moyen d'un garnissage (3), **caractérisé en ce que** ladite colonne (1) comporte au moins un plateau distributeur (2) selon l'une des revendications précédentes pour distribuer lesdits fluides sur ledit garnissage.

**16.** Barge flottante, notamment pour la récupération d'hydrocarbures, **caractérisée en ce qu'**elle comprend au moins une colonne (1) selon la revendication 15.

**17.** Utilisation d'une colonne selon la revendication 15 pour un procédé de traitement de gaz, de captage de $CO_2$, de distillation ou de transformation d'air.

**Patentansprüche**

**1.** Verteilerplatte (2) für eine Säule (1) zum Wärme- und/oder Materialaustausch zwischen einem Gas und einer Flüssigkeit, umfassend Mittel für den Durchtritt des Gases durch die Platte, **dadurch gekennzeichnet, dass** die Platte (2) eine obere Platte (P1) und eine untere Platte (P2) aufweist, wobei jede der Platten (P1, P2) mindestens zwei verschiedene Mittel (5, 10, 11, 12) für den Durchtritt der Flüssigkeit durch die Platte aufweist, wobei Öffnungen der Mittel (10,11) der oberen Platte (P1) in unterschiedlichen Höhen angeordnet sind, wobei von mindestens einem Mittel (10) der oberen Platte (P1) die niedrigste Öffnung mit einem der Mittel (12) für den Durchtritt der Flüssigkeit von der unteren Platte (P2) durch eine Zuführleitung (9) in Verbindung steht, wobei die Mittel für den Durchtritt des Gases Gasverteilungselementen in Form von Kaminen entsprechen, die von der oberen Fläche der unteren Platte (P2) hervorstehen und die obere Platte (P1) durchqueren, wobei die Höhe der Durchtrittsmittel (11) für den Durchtritt der Flüssigkeit von der oberen Platte (P1), die die höchste Öffnung aufweist, niedriger als die Höhe der Kamine für den Gasdurchtritt (4) ist.

**2.** Platte nach Anspruch 1, wobei die Mittel (11) für den Durchtritt der Flüssigkeit durch die obere Platte (P1) aus Kaminen gebildet sind, die von der oberen Fläche der oberen Platte (P1) hervorstehen.

**3.** Platte nach einem der vorhergehenden Ansprüche, wobei die Mittel (10, 12) der oberen und unteren Platte (P1, P2), die durch die Leitung (9) für den Durchtritt der Flüssigkeit in Verbindung stehen, durch Löcher der Platten (P1, P2) gebildet sind.

**4.** Platte nach einem der vorhergehenden Ansprüche, wobei die Mittel (5) für den Durchtritt der Flüssigkeit durch die obere Platte (P2) durch Löcher der oberen Platte (P2) gebildet sind.

**5.** Platte nach einem der vorhergehenden Ansprüche, wobei die Mittel (4) für den Durchtritt des Gases Gasverteilungselemente von zylindrischer, kubischer oder parallelepipedischer Form sind.

**6.** Platte nach einem der vorhergehenden Ansprüche, wobei der Halbraum, der über der ersten Platte (P1) gebildet ist, der erste Ebene (N1) genannt wird, durch eine Trennwand (6) im rechten Winkel zu der oberen Fläche der ersten Platte (P1) in Abteilungen (13, 14) unterteilt ist, wobei die Trennwände (6) der ersten Ebene (N1) mindestens eine Lochung (7) aufweisen, um das Fließen von einem Teil der Flüssigkeit zwischen den Abteilungen (13, 14) der ersten Ebene (N1) zu ermöglichen, und wobei der geschlossene Raum zwischen der ersten und zweiten Platte (P1, P2), der zweite Ebene (N2) genannt wird, durch mindestens eine Trennwand (8) in Abteilungen (15, 16) unterteilt ist.

7. Platte nach Anspruch 6, wobei die erste Ebene (N1) der Platte (2) mehrere sich schneidende Trennwände (6) aufweist.

8. Platte nach einem der Ansprüche 6 bis 7, wobei die Trennwände (6) der ersten Ebene (N1) aus zwei Reihen von Trennwänden (6) gebildet sind, wobei die Trennwände (6) von jeder Reihe zueinander parallel sind und sich mit den Trennwänden (6) der anderen Reihe schneiden.

9. Platte nach einem der Ansprüche 6 bis 8, wobei die Trennwände (8) der zweiten Ebene (N2) symmetrisch zu den Trennwänden der ersten Ebene (N1) in Bezug auf die obere Platte (P1) angeordnet sind.

10. Platte nach Anspruch 8, wobei die Lochungen (7) von zwei parallelen Trennwänden (6) der ersten Ebene (N1), die eine gleiche Abteilung (13, 14) begrenzen, nicht ausgerichtet sind.

11. Platte nach einem der Ansprüche 6 bis 10, wobei die Lochungen (7) an der Basis der Trennwände (6) der ersten Ebene (N1) angeordnet sind.

12. Platte nach einem der Ansprüche 6 bis 11, wobei die Trennwände (6) der ersten Ebene (N1) eine Höhe aufweisen, die größer ist als oder im Wesentlichen gleich der Höhe in der ersten Ebene (N1) der Gasverteilungsmittel (4) ist.

13. Platte nach einem der Ansprüche 6 bis 12, wobei die Abmessungen $L_{c1}$ und $L_{c2}$ einer Abteilung (13, 14) der ersten Ebene (N1) zwischen 100 und 1.000 mm betragen.

14. Platte nach einem der Ansprüche 6 bis 13, wobei die erste Ebene (N1) mindestens eine Abteilung zum Zurückhalten aufweist, die am Rand des Verteilers angeordnet ist.

15. Säule zum Wärme- und/oder Materialaustausch zwischen einem Gas und einer Flüssigkeit, wobei die zwei Flüssigkeiten durch eine Packung (3) in Kontakt gebracht werden, **dadurch gekennzeichnet, dass** die Säule (1) mindestens eine Verteilerplatte (2) nach einem der vorhergehenden Ansprüche zum Verteilen der Flüssigkeiten auf der Packung aufweist.

16. Schwimmender Lastkahn, insbesondere für die Gewinnung von Kohlenwasserstoffen, **dadurch gekennzeichnet, dass** er mindestens eine Kolonne (1) nach Anspruch 15 aufweist.

17. Verwendung einer Kolonne nach Anspruch 15 für ein Verfahren zur Behandlung von Gas, zum Auffangen von $CO_2$, zur Destillation oder zur Transformation von Luft.

**Claims**

1. A distributor tray (2) for a gas/liquid heat and/or material exchange column (1), comprising means enabling passage of the gas through said tray, **characterized in that** said tray (2) comprises an upper plate (P1) and a lower plate (P2), each one of said plates (P1, P2) comprising at least two distinct means (5, 10, 11, 12) for passage of said liquid through said plate, the openings of said means (10, 11) of said upper plate (P1) being provided at different heights, at least one means (10) of said upper plate (P1) with the lower opening communicating with one of said means (12) for passage of said liquid of said lower plate (P2) through a supply line (9), said gas passage means corresponding to gas distribution means in form of chimneys projecting from the upper face of said lower plate (P2) and running through said upper plate (P1), the height of said passage means (11) for passage of said liquid of said upper plate (P1) with the higher opening being smaller than the height of said gas passage chimneys (4).

2. A tray as claimed in claim 1, wherein one of said means (11) enabling passage of said liquid through said upper plate (P1) consists of chimneys projecting from the upper face of said upper plate (P1).

3. A tray as claimed in any one of the previous claims, wherein said means (10, 12) of said upper and lower plates (P1, P2) communicating through said line (9) for passage of said liquid consist of orifices provided in said plates (P1, P2).

4. A tray as claimed in any one of the previous claims, wherein one of said means (5) for passage of said liquid through said upper plate (P2) consists of orifices provided in said upper plate (P2).

5. A tray as claimed in any one of the previous claims, wherein said gas passage means (4) are gas distribution elements of cylindrical, cubic or parallelepipedic shape.

6. A tray as claimed in any one of the previous claims, wherein the half-space formed above said first plate (P1), referred to as first level (N1), is divided into compartments (13, 14) by means of at least one wall (6) vertical to the upper face of said first plate (P1), said walls (6) of said first level (N1) comprising at least one perforation (7) enabling part of said liquid to flow between said compartments (13, 14) of said first level (N1), and wherein the closed space contained between said first and second plates (P1, P2), referred to as second level (N2), is divided into compartments (15, 16) by means of at least one wall (8).

7. A tray as claimed in claim 6, wherein said first level (N1 of said tray (2) comprises several secant walls (6).

8. A tray as claimed in any one of claims 6 to 7, wherein said walls (6) of said first level (N1) consist of two series of walls (6), said walls (6) of each series being parallel to one another and secant to walls (6) of the other series.

9. A tray as claimed in any one of claims 6 to 8, wherein walls (8) of said second level (N2) are symmetrical to the walls of said first level (N1) with respect to said upper plate (P1).

10. A tray as claimed in claim 8, wherein said perforations (7) of two parallel walls (6) of said first level (N1) delimiting a single compartment (13, 14) are not aligned.

11. A tray as claimed in any one of claims 6 to 10, wherein said perforations (7) are provided at the base of said walls (6) of said first level (N1).

12. A tray as claimed in any one of claims 6 to 11, wherein the height of said walls (6) of said first level (N1) is greater than or substantially equal to the height in said first level (N1) of said gas distribution means (4).

13. A tray as claimed in any one of claims 6 to 12, wherein dimensions $L_{c1}$ and $L_{c2}$ of a compartment (13, 14) of said first level (N1) range between 100 and 1000 mm.

14. A tray as claimed in any one of claims 6 to 13, wherein said first level (N1) comprises at least one retention compartment arranged on the periphery of the distributor.

15. A gas/liquid heat and/or material exchange column wherein the two fluids are contacted by means of a packing (3), **characterized in that** said column (1) comprises at least one distributor tray (2) as claimed in any one of the previous claims for distributing said fluids on said packing.

16. A floating barge, notably for hydrocarbon recovery, **characterized in that** it comprises at least one column (1) as claimed in claim 15.

17. Use of a column as claimed in claim 15 for a gas treatment, $CO_2$ capture, distillation or air conversion process.

**Figure 1**

**Art Antérieur
Figure 2**

$$U_{L1} >> U_{L2}$$

**Art antérieur
Figure 3**

Figure 4

Figure 5

**Figure 6**

**Figure 7**

**Figure 8**

**Figure 9**

**Figure 10**

**RÉFÉRENCES CITÉES DANS LA DESCRIPTION**

**Documents brevets cités dans la description**

- US 6338774 B
- US 2004020238 A
- US 6149136 A
- US 5752538 A
- FR 2771018 A
- US 6294053 B1
- FR 2771019 A
- US 6395138 B1
- US 5132055 A
- FR 2989595 A
- US 2013277868 A
- WO 2005063352 A
- US 5683629 A

**Littérature non-brevet citée dans la description**

- **HIRT ; NICHOLS.** *JCP,* 1981, vol. 39, 201-225